**Europäisches Patentamt**

**European Patent Office**

**Office européen des brevets**

(11) Veröffentlichungsnummer: **0 037 899**
**A1**

(12) **EUROPÄISCHE PATENTANMELDUNG**

(21) Anmeldenummer: **81101626.0**

(22) Anmeldetag: **06.03.81**

(51) Int. Cl.³: **G 01 C 9/12, E 21 B 47/02**

(30) Priorität: **14.04.80 DE 3014235**

(43) Veröffentlichungstag der Anmeldung: **21.10.81**
**Patentblatt 81/42**

(84) Benannte Vertragsstaaten: **AT CH FR GB IT LI SE**

(71) Anmelder: **H. MAIHAK AG, Semperstrasse 38,**
**D-2000 Hamburg 60 (DE)**

(72) Erfinder: **Dreyer, Helmut, Grimmstrasse 18,**
**D-2000 Hamburg 55 (DE)**
Erfinder: **Möller, Rudolf, Harnackring 21,**
**D-2000 Hamburg 80 (DE)**

(74) Vertreter: **Meyer-Roxlau, Reiner Ferdinand, Dipl.-Ing. et**
**al, Patentanwälte Dr. Franz Lederer Dipl.-Ing. Reiner F.**
**Meyer-Roxlau Lucile-Grahn-Strasse 22,**
**D-8000 München 80 (DE)**

(54) **Verfahren und Vorrichtung zur Messung von Neigungswinkeln oder Winkeländerungen in Schüttungen oder dergleichen.**

(57) Zur Messung von Neigungswinkeln oder Winkeländerungen insbesondere in Schüttungen mittels eines entsprechenden Meßaufnehmers in einer Tauchsonde wird diese in Rohre eingefahren, die in den Schüttungen installiert sind, zur Bestimmung der Lotrechten der Meßaufnehmer in unterschiedlichen Winkelstellungen in den Rohren angeordnet und in jeder Winkelstellung zum Rohr ein Meßwert aufgenommen und ein dementsprechendes Meßsignal erzeugt. Nach dem Einfahren der Tauchsonde in das Rohr wird ihre Winkelstellung zu letzterem unverändert aufrechterhalten. Nach der Aufnahme eines ersten Meßwerts und der Erzeugung des dementsprechenden Meßsignals wird der Meßaufnehmer innerhalb der Tauchsonde um einen gewünschten bestimmten Winkel in eine neue Winkelstellung zum Rohr verschwenkt, wonach der dieser neuen Winkelstellung entsprechende Meßwert aufgenommen und ein dementsprechendes Meßsignal erzeugt wird. Die zugehörige Meßvorrichtung verfügt also über einen Meßaufnehmer (6, 7, 8, 9) in einer Tauchsonde (1), die in Rohre einfahrbar ist, wobei der Meßaufnehmer (6, 7, 8, 9) in unterschiedlichen Winkelstellungen in den Rohren angeordnet werden kann. Dabei sind alle zum Meßaufnehmer gehörenden Elemente (6, 7, 8, 9) an einer Welle (3) angesetzt, die ihrerseits über ein Kugellager (4) spielfrei und drehbar im Tauchsondengehäuse (1) gelagert und die an eine Verstelleinrichtung (2) angeschlossen ist, die eine Winkelverstellung der Welle (3) zum Tauchsondengehäuse (1) gestattet.

Verfahren und Vorrichtung zur Messung von Neigungswinkeln
oder Winkeländerungen in Schüttungen oder dergleichen

---

Die Erfindung betrifft ein Verfahren bzw. eine Vorrichtung zur
Messung von Neigungswinkeln oder Winkeländerungen insbesondere
in Schüttungen, gewachsenen Böden, Baugruben oder Felswänden
gemäß Oberbegriff des Anspruchs 1 bzw. 3.

Die angesprochene Messung betrifft auch beispielsweise die
Feststellung von Verschiebungen in Schüttungen, wie Dämmen,
Deichen etc., und gewachsenen Böden oder Neigungsbewegungen
und Durchbiegungen von Bauwerken, Baugruben und Felswänden.

Es ist eine Reihe von Geräten bekannt, bei denen ein Meßsystem in ein Rohr eingefahren wird und an frei wählbaren
Punkten die Winkelabweichung von der Lotrechten aus einer
Doppelbestimmung ermittelt wird. Dabei wird die Änderung der
Resonanzfrequenz einer angeregten Meßsaite als Maß für eine
Winkeländerung benutzt. Bekannt sind aber auch Meßsonden, die
mit Beschleunigungsaufnehmern arbeiten.

Im allgemeinen ist es üblich, zu einem zunächst gemessenen
Neigungswinkel um 90$^{\circ}$ versetzt einen zweiten Neigungswinkel
zu bestimmen. Werden im Untergrund oder den Bauwerken oder
dergleichen eingelassene Rohre, insbesondere Nutrohre, ver-

0037899

wendet, so können die absoluten Winkel zur Lotrechten nur
dann gemessen werden, wenn das Meßsystem ein zweites Mal
um 180$^O$ verschwenkt in das Rohr eingefahren wird.

Diese Verfahrensweise ist jedoch deshalb nachteilig, weil
zu unterschiedlichen Zeiten gemessen wird und bei Vorhandensein von Wasser stark schwankende Temperatureinflüsse zu beachten sind. Darüber hinaus entstehen sehr häufig beim erneuten
Einfahren und an den Stoßstellen der Rohrübergänge starke
mechanische Stöße auf das Meßsystem, so daß Nullpunkt-Verschiebungen auftreten.

Bei einem anderen Verfahren sind diese Probleme dadurch gelöst, daß der gesamte Meßaufnehmer im Rohr von dessen oberen
freien Ende aus mittels eines bis dort reichenden Gestänges
in 90$^O$-Schritten verschwenkt wird und nach jeder Verschwenkung
das Meßsystem mechanisch im Rohr festgesetzt wird. Als Nachteil dieser Ausbildung ist jedoch zu beachten, daß wegen der
Gestängeanordnung nur verhältnismäßig geringe Tiefen erfaßt
werden können, während entsprechende Messungen häufig auch
noch in Tiefen von auch 200 Metern und mehr durchgeführt werden
müssen. Darüber hinaus ist nur eine schlechte Reproduzierbarkeit der Meßwerte zu erreichen, da das erneute Festsetzen
nach jeder Verschwenkung den Geber in undefinierte Stellungen
bewegt.

Der Erfindung liegt die Aufgabe zugrunde, ein Verfahren und
eine zugehörige Vorrichtung der eingangs bezeichneten Gattung
zu schaffen, durch die die vorstehend angegebenen Nachteile
überwunden werden. So soll einerseits eine eindeutige Reproduzierbarkeit der Meßwerte erreicht werden können, andererseits aber auch eine Messung in beliebig großer Tiefe durchgeführt werden können. Des weiteren soll das eigentliche Meßsystem keiner Gefahr von Stößen ausgesetzt sein, so daß auch
keine Gefahr einer Nullpunkt-Verschiebung besteht.

Diese Aufgabe wird erfindungsgemäß in verfahrenstechnischer bzw. vorrichtungstechnischer Hinsicht durch die im kennzeichnenden Teil der Ansprüche 1 bzw. 3 angegebenen Maßnahmen
gelöst.

Durch die jetzt vorgesehene Ausbildung ist es nicht mehr
nötig, die Tauchsonde nach einer ersten Messung außer dem
Schüttungsrohr zu entfernen und in einer neuen Winkelstellung zu letzterem erneut einzufahren. Vielmehr wird
das Tauchsondenrohr     für den vollständigen Meßvorgang
lediglich ein einziges Mal in das Schüttungsrohr eingefahren.
Nach Durchführung der ersten Messung wird lediglich der Meßaufnehmer zur Erzielung einer neuen Winkelstellung zum
Schüttungsrohr innerhalb des Tauchsondengehäuses verschwenkt,
woran anschließend die nächste Messung durchführbar ist.
Diese Verschwenkung läßt sich insbesondere bei Bewirkung auf
elektromotorische Weise exakt definiert durchführen, so daß
genaue Kenntnis über den Verschwenkungswinkel besteht und der
Nullpunkt exakt bestimmbar ist. Es besteht also keine Gefahr
einer Nullpunkt-Verschiebung zwischen den zwei Meßwerten, so
daß das erreichte Meßergebnis ein äußerst präzises ist.

In Hinblick auf das Einfahren der Tauchsonde in das Schüttungsrohr empfiehlt sich die Vorsehung von Führungsrollen bzw.
Rädern am Äußeren des Tauchsondengehäuses. In diesem Zusammenhang ist weiter zu empfehlen, am Tauchsondengehäuse einerseits zwar drehbare, aber ansonsten starr angeordnete erste
Rollen vorzusehen und darüber hinaus ebenfalls drehbare,
darüber hinaus aber federnd gelagerte zweite Rollen, wobei
letztere zweckmäßigerweise den ersteren im wesentlichen diametral gegenüberliegend angeordnet sein sollten.

Infolge der erfindungsgemäßen Ausbildung kann also an jeder
frei wählbaren Stelle und in beliebiger Tiefe ohne neues
Einfahren der Tauchsonde in das Schüttungsrohr der Meßwert
aufgenommen werden, z.B. in vier rechtwinklig zueinander
vorgesehenen Richtungen, die beispielsweise den vier Haupthimmelsrichtungen entsprechen. Das arithmetische Mittel von jeweils zwei Meßwerten, die um 180° zueinander verschwenkten Winkelstellungen des Meßsystems im Schüttungsrohr entsprechen, ergibt jeweils den Nullpunkt bzw. die zum Erdmittelpunkt gerichtete Lotrechte.

Im folgenden wird die Erfindung beispielhaft und unter Bezugnahme auf die Zeichnungen weiter ins einzelne gehend erläutert; in den Zeichnungen zeigen:

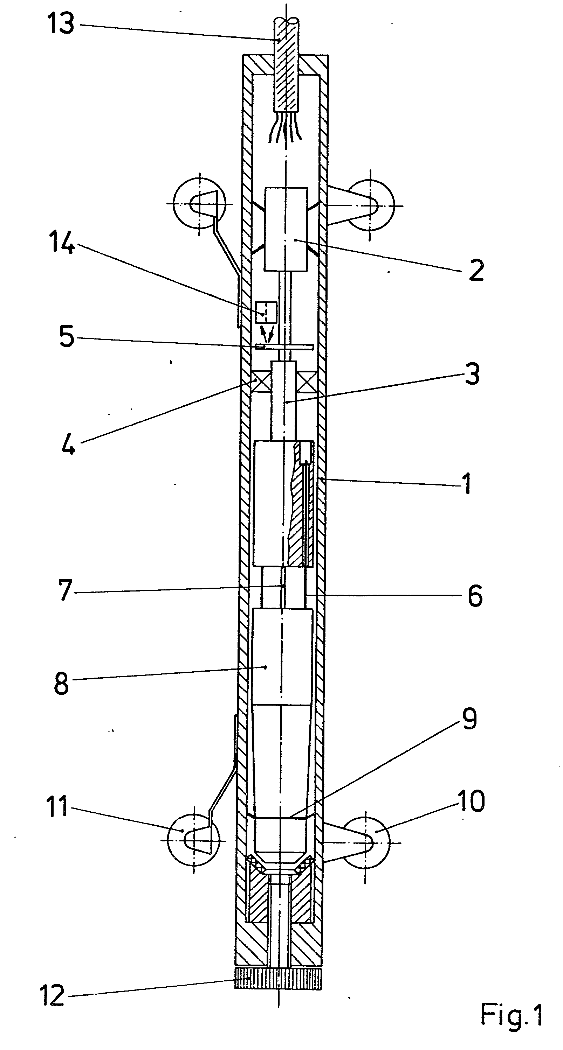

Figur 1      einen Längsschnitt durch eine erfindungsgemäße Vorrichtung und

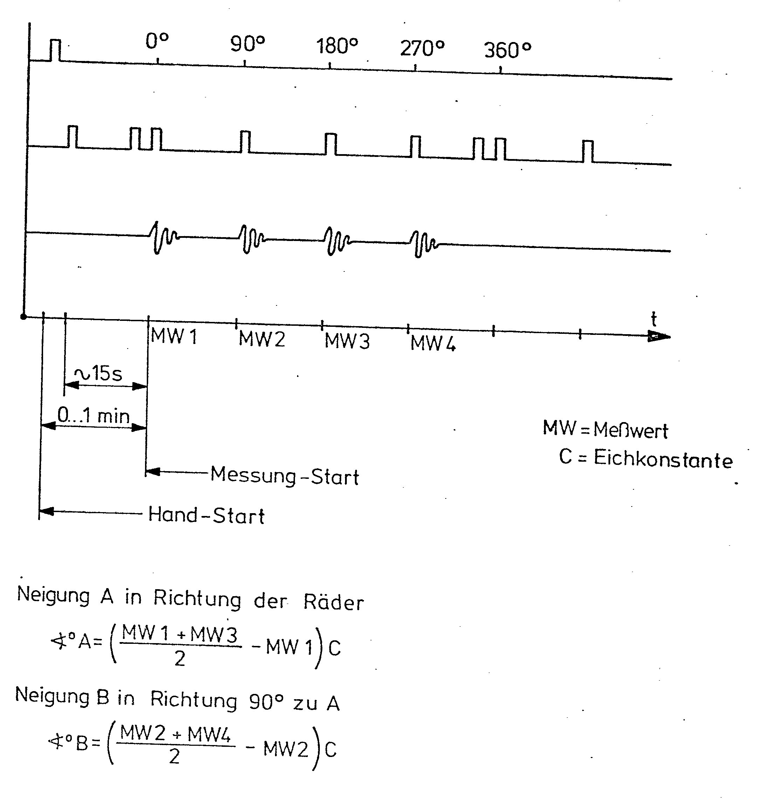

Figur 2      eine graphische Darstellung der mit der Vorrichtung der Figur 1 erreichbaren Meßwerte.

In einem Tauchsondengehäuse 1 ist eine Welle 3 über ein Kugellager 4 spielfrei und drehbar gelagert. An der Welle 3 sitzt ein Verstellmotor 2, der drehfest im Tauchsondengehäuse 1 befestigt ist. Darüber hinaus trägt die Welle 3 eine Reflexionsscheibe 5 mit Reflexionsmarken  und das Meßsystem, das aus Meßsaite 6, Federstab 7, Pendel 8 und Dämpfungsscheibe 9 besteht.

An der Außenseite des Tauchsondengehäuses 1 sind feste Führungsrollen 10 und federnde Führungsrollen 11 angebracht. Des weiteren ist eine Transportsicherung 12 vorgesehen. Die Meßleitung 13 besteht in einem stahlarmierten Tragkabel, dessen Armierung zur Aufnahme des Tauchsondengewichts dient. Eine Reflexionslichtschranke 14  dient zur Erkennung der Stellung der Meßsaite 6 zu den Führungsrollen 10 bzw. 11 und damit zur Erkennung der Winkelstellung des Meßsystems zu dem nicht dargestellten Schüttungsrohr.

Zur Durchführung einer Messung wird das Tauchsondengehäuse 1 an dem Tragkabel 13 auf die gewünschte Tiefe in dem nicht dargestellten Schüttungsrohr abgesenkt. Der eingebaute Motor 2 verschwenkt das Meßsystem innerhalb des Tauchsondengehäuses 1 innerhalb einer Minute um 360$^{\circ}$. Eine an der Reflexionsscheibe 5 vorgesehene Doppelmarke läßt die Anfangsausrichtung des Meßsystems in Hinblick auf das
Schüttungsrohr erkennen und löst gleichzeitig das erste Meßsignal aus. Weitere vorzugsweise um 90$^{\circ}$ versetzte Marken
lösen die nächsten zu dieser Meßtiefe gehörigen Meßsignale
aus.

Die durch 2 geteilte Summe zweier Meßsignale, die um 180$^{\circ}$
zueinander versetzten Winkelstellungen des Meßaufnehmers
hinsichtlich des Tauchsondengehäuses 1 und damit des Schüttungsrohrs entsprechen, ergibt den Nullpunkt. Die Differenz eines
der beiden Signale zum Nullpunkt-Meßwert ergibt multipliziert
mit einem Faktor für die Empfindlichkeit direkt die Winkelabweichung von der zum Erdmittelpunkt gerichteten Lotrechten.

# PATENTANWÄLTE

**DR. A. VAN DER WERTH**
DIPL.-ING. (1934-1974)

**DR. FRANZ LEDERER**
DIPL.-CHEM.

**R. F. MEYER-ROXLAU**
DIPL.-ING.

0037899

8000 MÜNCHEN 80
LUCILE-GRAHN-STRASSE 22

TELEFON: (0 89) 47 29 47
TELEX: 524 624 LEDER D
TELEGR.: LEDERERPATENT

5. März 1981

H. Maihak AG
Semperstraße 38

2000 Hamburg 60

## Patentansprüche

1. Verfahren zur Messung von Neigungswinkeln oder Winkeländerungen insbesondere in Schüttungen, gewachsenen Böden, Baugruben oder Felswänden mittels eines entsprechenden Meßaufnehmers in einer Tauchsonde, die in Rohre, insbesondere Nutrohre, eingefahren wird, die in den Schüttungen installiert sind, wobei zur Bestimmung der Lotrechten, also des Nullpunkts, der Meßaufnehmer in unterschiedlichen Winkelstellungen in den Rohren angeordnet wird, wobei in jeder Winkelstellung zum Rohr ein Meßwert aufgenommen und ein dementsprechendes Meßsignal erzeugt wird, dadurch gekennzeichnet, daß nach dem Einfahren der Tauchsonde in das Schüttungsrohr deren Winkelstellung zu letzterem unverändert aufrechterhalten wird und daß nach der Aufnahme eines ersten Meßwerts und der Erzeugung

0037899

des dementsprechenden Meßsignals der Meßaufnehmer innerhalb
der Tauchsonde um einen gewünschten bestimmten Winkel in eine
neue Winkelstellung zum Schüttungsrohr verschwenkt wird, wonach
der dieser neuen Winkelstellung entsprechende Meßwert aufgenommen und ein dementsprechendes Meßsignal erzeugt wird.

2. Verfahren nach Anspruch 1, dadurch gekennzeichnet, daß die
   Verschwenkung des Meßaufnehmers innerhalb der Tauchsonde
   zwecks Erreichung einer neuen Winkelstellung zum Schüttungsrohr unter elektromotorischer Einwirkung erfolgt.

3. Vorrichtung zur Messung von Neigungswinkeln oder Winkeländerungen insbesondere in Schüttungen, gewachsenen Böden,
   Baugruben oder Felswänden, zur Durchführung des Verfahrens
   nach Anspruch 1 oder 2, mit einem entsprechenden Meßaufnehmer in einer Tauchsonde, die in Rohre, insbesondere Nutrohre, einfahrbar ist, die in den Schüttungen installiert
   sind, wobei zur Bestimmung der Lotrechten, also des Nullpunkts,
   der Meßaufnehmer in unterschiedlichen Winkelstellungen in den
   Rohren angeordnet, in jeder Winkelstellung zum Rohr ein Meßwert aufgenommen und ein dementsprechendes Meßsignal erzeugt
   werden kann, dadurch gekennzeichnet, daß alle zum Meßaufnehmer
   gehörenden Elemente (6, 7, 8, 9) an einer Welle (3) angesetzt sind, die ihrerseits über ein Kugellager (4) spielfrei
   und drehbar im Tauchsondengehäuse (1) gelagert ist, und daß
   die Welle (3) an eine Verstelleinrichtung (2) angeschlossen
   ist, die eine Winkelverstellung der Welle (3) zum Tauchsondengehäuse (1) gestattet.

4. Vorrichtung nach Anspruch 3, dadurch gekennzeichnet, daß die
   an die Welle (3) angeschlossene Verstelleinrichtung in einem
   Elektromotor (2) besteht.

Fig.1

H. Maihak AG

0°    90°    180°    270°    360°

MW 1    MW 2    MW 3    MW 4

$\sim$15s

0...1 min

Messung-Start

Hand-Start

MW = Meßwert

C = Eichkonstante

Neigung A in Richtung der Räder

$$\sphericalangle°A = \left(\frac{MW\,1 + MW\,3}{2} - MW\,1\right)C$$

Neigung B in Richtung 90° zu A

$$\sphericalangle°B = \left(\frac{MW\,2 + MW\,4}{2} - MW\,2\right)C$$

Fig. 2

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE - B - 1 448 598 (ASKANIA) <br> * ganze Schrift * <br> -- | 1-4 |
| | US - A - 3 359 782 (L.VAN BEY) <br> * Ansprüche, Zusammenfassung * <br> -- | 1-4 |
| A | DE - A1 - 2 458 928 (M.K. RUSSELL et al.) <br> * Anspruch 1 * <br> -- | |
| A | DE - C - 1 129 434 (EASTMAN OIL WELL SURVEY CO.) <br> * Anspruch 1 * <br> -- | |
| A | US - A - 3 555 691 (H.-D. JACOBY) <br> * ganze Schrift * <br> ---- | |

**KLASSIFIKATION DER ANMELDUNG (Int. Cl.³)**

G 01 C 9/12

E 21 B 47/02

**RECHERCHIERTE SACHGEBIETE (Int. Cl.³)**

E 21 B 47/02

G 01 B 5/24

G 01 B 11/26

G 01 C 9/00

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Berlin | 22-07-1981 | KÖHN |